# FASCICULE DE BREVET EUROPEEN

(11) **EP 1 936 872 B1**
(45) Date de publication et mention de la délivrance du brevet: **02.11.2011**
(21) Numéro de dépôt: 07123563.4
(22) Date de dépôt: 19.12.2007
(51) Int. Cl.: H04W 24/02

(54) **Réseau radio flexible**
Flexibles Funknetzwerk
Flexible radio network

(30) Priorité: 22.12.2006 FR 0655893
(43) Date de publication de la demande: 25.06.2008
(73) Titulaire: Alcatel Lucent, 75008 Paris (FR)
(72) Inventeur: Bereski, Philippe, 91390, MORSANG SUR ORGE (FR); Soulie, Antoine, 75014, PARIS (FR)
(74) Mandataire: Keseris, Denis

(56) Documents cités:
- US-A1- 2001 036 163
- US-A1- 2002 167 954

## Description

L'invention se rapporte au domaine des réseaux de télécommunication radio ou hertziens, notamment aux réseaux point à multipoint à haut débit.

Dans un système radio point à multipoint, un émetteur central, qui sera appelé station de base, est capable d'établir des liaisons radio avec plusieurs récepteurs, qui seront appelés terminaux radio, situés dans une zone de couverture, aussi appelée cellule. Les liaisons peuvent être unidirectionnelles ou bidirectionnelles. Une méthode de multiplexage est utilisée pour multiplexer ces liaisons sur le support air. Des méthodes de multiplexage connues sont notamment TDMA, FDMA, CSMA, CDMA et OFDMA. La méthode de multiplexage peut être la même dans le sens montant et dans le sens descendant ou être différente. Les réseaux radio point à multipoint font l'objet de nombreux développements tendant à l'accroissement des débits de communication, comme le montre l'évolution des technologies 2G, EDGE, 3G, HSDPA, HSUPA, WI-FI, WIMAX et autres. Cette évolution est motivée, entre autres, par la volonté de faire converger les réseaux voix, données et vidéo (triple play).

US-A-20020167954 décrit une architecture de réseau de type point à multipoint consécutif (CPMP), dans laquelle des stations de base et des terminaux radio sont disposés de manière à former à la fois un réseau d'accès point à multipoint et un réseau de coeur de manière intégrée. Ce document concerne des réseaux cellulaires à infrastructure fixe.

Dans des applications spécifiques, il existe un besoin de réseaux flexibles, faciles à déployer et à reconfigurer, notamment pour des opérations de terrain liées aux secours d'urgence, à la sécurité ou à la défense, par exemple sur une zone dépourvue d'infrastructure de télécommunication. Les technologies radio disponibles aujourd'hui pour ces applications atteignent des débits nettement inférieurs aux réseaux d'accès radio précités. Par exemple, les radios de type VHF atteignent des débits de données de l'ordre de 10 à 100 kb/s.

Il existe donc des besoins pour des réseaux de télécommunication radio à haut débit présentant une certaine flexibilité fonctionnelle. Par flexibilité fonctionnelle, on entend un ensemble de caractéristiques incluant la faculté d'accepter facilement un nouveau noeud de communication dans le réseau, la faculté de s'adapter à la désactivation ou disparition d'un noeud du réseau, la faculté d'accepter la mobilité des stations de base et, plus généralement, toute caractéristique facilitant le déploiement ou le redéploiement du réseau. Il existe aussi un besoin pour un réseau flexible à haut débit capable de garantir des niveaux de qualité de service. L'invention a pour but de répondre à au moins certains de ces besoins.

Pour cela, l'invention fournit un noeud de télécommunication, comportant au moins une station de base locale apte à mettre en oeuvre une méthode d'accès multiple pour établir des liaisons radio point à multipoint avec des terminaux radio, au moins un terminal radio local apte à mettre en oeuvre ladite méthode d'accès multiple pour établir une liaison radio avec une station de base, et un commutateur pour transférer des données entre ledit terminal radio local et ladite station de base locale.

Selon un mode de réalisation préféré, la station de base locale est apte à émettre des signaux de balise pour être détectée par des terminaux radio adjacents, le terminal radio local comporte des moyens de détection de signaux de balise pour détecter une station de base adjacente audit terminal radio local, et le noeud de communication comporte des moyens de gestion des liaisons radio pour inhiber l'établissement de liaisons radio redondantes impliquant ledit au moins un terminal radio local et/ou ladite au moins une station de base locale.

Les termes « station de base locale » et « terminal radio local » désignent une station de base (ou plusieurs) et un terminal radio (ou plusieurs) qui possèdent une liaison autre que l'interface air pour échanger des données entre eux, notamment à travers un réseau local muni d'un commutateur ou routeur. Le terme « noeud de communication distant » désigne un noeud qui ne possède pas d'autre liaison que l'interface air pour échanger des données avec le terminal radio local ou la station de base locale. Le terme « adjacent » désigne ici une situation physique permettant d'établir une communication radio entre une station de base et un terminal radio, compte tenu des caractéristiques des interfaces radio de ces équipements et des paramètres environnementaux qui peuvent influencer la portée des liaisons radio. Au sens de l'invention, une liaison radio peut être redondante par rapport à une autre liaison radio ou bien par rapport au réseau local d'un noeud.

Selon d'autres modes de réalisation avantageux, le noeud de communication peut présenter une ou plusieurs des caractéristiques suivantes :
- les moyens de gestion des liaisons radio sont aptes à inhiber l'établissement d'une liaison radio entre ledit ou chaque terminal radio local et ladite ou chaque station de base locale. Cette mesure offre deux avantages : laisser plus de bande passante de la station de base locale disponible pour établir des liaisons avec des terminaux radio distants, et laisser la possibilité au terminal radio local d'tablir une liaison avec une station de base distante. Elle favorise donc la connectivité du noeud.
- les moyens de gestion des liaisons radio sont aptes à configurer les moyens de détection d'un terminal radio local de manière que lesdits moyens de détection surveillent une partie du spectre excluant une ou chaque fréquence sur laquelle une station de base locale émet des signaux de balise.
- il comporte une pluralité de terminaux radio locaux, lesdits moyens de gestion des liaisons radio étant aptes à détecter qu'une liaison radio est établie entre un premier desdits terminaux radio locaux et une station de base et à inhiber l'établissement d'une liaison radio entre un second desdits terminaux radio locaux et ladite station de base en réponse à ladite détection.
- les moyens de gestion des liaisons radio sont aptes à détecter qu'une liaison radio est établie entre ladite station de base locale et un premier terminal radio d'un noeud distant et à inhiber l'établissement d'une liaison radio entre ladite station de base locale et un second terminal radio dudit noeud distant en réponse à ladite détection.
- il comporte une pluralité de stations de base locales, les moyens de gestion des liaisons radio étant aptes à détecter qu'une liaison radio est établie entre une première desdites stations de base locales et un noeud distant et à inhiber l'établissement d'une liaison radio entre une seconde desdites stations de base locales et ledit noeud distant en réponse à ladite détection.
- l'inhibition de ces liaisons peut être opérée à différents niveaux, par exemple à un niveau physique, par des mesures telles que la sélection ou restriction des fréquences utilisables par un terminal radio, ou à un niveau logique par des mesures telles que la sélection ou restriction des identifiants logiques acceptables par un terminal radio ou une station de base.
- la ou chaque station de base locale est apte à réserver et allouer des ressources du support air à des communications déterminées. La réservation de ressources permet de garantir une qualité de service prédéfinie dans les communications avec les terminaux radio. Selon différents modes de réalisation, une station de base peut mettre en oeuvre des réservations et allocations de ressources du support air avec différents niveaux de granularité, par exemple le niveau du terminal radio, le niveau du flux de données, le niveau de la classe de service (par exemple pour un classe « best effort »), etc. Le partage des ressources du support air peut être réalisé sous de multiples formes selon les techniques de multiplexage employées, par exemple sous la forme d'intervalles temporels dans une technique TDMA, d'intervalles fréquentiels dans une technique FDMA, de codes d'étalement de spectre dans une technique CDMA, d'une combinaison d'intervalles temporels et fréquentiels dans une technique OFDMA, et d'autres combinaisons.
- il comporte un récepteur radio pour recevoir sur un canal radio à bas débit des données de configuration définissant des ressources du support air devant être allouées à une station de base locale, et un module de configuration pour configurer ladite station de base locale de manière à respecter lesdites ressources du support air allouées. Ainsi, des ressources du support air peuvent être allouées à distance à la station de base d'un noeud, par exemple depuis un système de gestion de réseau, de manière à satisfaire une condition d'orthogonalité ou condition de non-interférence avec les autres stations de base du réseau.
- il comporte un récepteur radio pour recevoir sur un canal radio à bas débit des données de configuration définissant un état d'activité d'une station de base locale, et un module de configuration pour activer ou désactiver ladite station de base locale en fonction desdites données de configuration. Ainsi, la station de base d'un noeud peut être activée ou désactivée à distance, par exemple depuis un système de gestion de réseau, ce qui facilite la reconfiguration du réseau radio.

Un tel noeud de télécommunication peut être réalisé sous la forme d'un appareil unitaire, de préférence relativement compact, ce qui facilite les opérations de transport et d'installation. Un système de production d'énergie peut éventuellement être intégré au noeud pour le rendre autosuffisant, par exemple avec des batteries et un générateur solaire ou à moteur thermique. Selon un mode de réalisation particulier, le noeud de télécommunication est installé sur un véhicule terrestre ou naval.

L'invention fournit également un réseau radio comprenant une pluralité de noeuds de télécommunication, caractérisé par le fait qu'il comporte un système de gestion, centralisé ou distribué, pour définir un partage des ressources du support air entre des stations de base desdits noeuds de télécommunication, et un émetteur radio apte à transmettre sur ledit canal radio à bas débit des données de configuration définissant les ressources du support air devant être allouées à chacune desdites stations de base en fonction dudit partage.

L'invention fournit également un procédé de gestion des liaisons radio dans un réseau de télécommunication radio, comprenant les étapes consistant à :
émettre des signaux de balise depuis une station de base, détecter les signaux de balise au niveau d'un terminal radio, déterminer si le terminal radio et la station de base appartiennent à un même noeud dudit réseau, et inhiber l'établissement d'une liaison radio entre le terminal radio et la station de base lorsqu'ils appartiennent à un même noeud dudit réseau. L'étape d'inhibition peut prendre la forme d'une mesure interrompant une procédure d'attachement radio entre le terminal radio et la station de base. Une telle interruption peut être effectuée à différents niveaux de la procédure d'attachement.

L'invention fournit également un procédé de configuration d'un noeud de télécommunication, comprenant les étapes consistant à :
déployer au moins un noeud de télécommunication radio comportant au moins une station de base locale apte à mettre en oeuvre une méthode d'accès multiple pour établir des liaisons radio point à multipoint avec des terminaux radio, au moins un terminal radio local apte à mettre en oeuvre ladite méthode d'accès multiple pour établir une liaison radio avec une station de base, et un commutateur pour transférer des données entre ledit terminal radio local et ladite station de base locale,
transmettre sur au moins un canal radio à bas débit et à longue portée des données de configuration définissant des ressources du support air devant être allouées à ladite station de base locale,
recevoir lesdites données de configuration au niveau dudit noeud de télécommunication et configurer ladite station de base locale de manière à respecter lesdites ressources du support air allouées.

De préférence, ce procédé comprend en outre l'étape consistant à produire lesdites données de configuration en fonction d'une position dudit noeud de télécommunication ou bien en fonction de mesures de qualité des signaux de la station de base. Ces mesures peuvent par exemple être fournies par un terminal radio se situant dans une zone de recruvrement des cellules de deux stations de base qui produisent des interférences mutuelles. Une telle situation peut ainsi être l'événement déclencheur de la reconfiguration d'une station de base.

L'invention fournit également un procédé de configuration d'un noeud de télécommunication, comprenant les étapes consistant à déployer au moins un noeud de télécommunication radio comportant au moins une station de base locale apte à mettre en oeuvre une méthode de multiplexage pour établir des liaisons radio point à multipoint avec des terminaux radio, au moins un terminal radio local apte à mettre en oeuvre ladite méthode de multiplexage pour établir une liaison radio avec une station de base, et un commutateur pour transférer des données entre ledit terminal radio local et ladite station de base locale, transmettre sur un canal radio à bas débit et à longue portée des données de configuration désignant une station de base, recevoir lesdites données de configuration au niveau dudit noeud de télécommunication et configurer un dit terminal radio local de manière qu'il recherche l'établissement d'une liaisons radio avec ladite station de base désignée.

L'invention fournit également un système de gestion de réseau utilisable pour configurer des stations de base ou des terminaux radio selon ces procédés.

Une idée à la base de l'invention est de constituer un noeud de télécommunication utilisant des technologies point à multipoint à haut débit et capable de réaliser des liaisons radio entre pairs pour constituer un réseau maillé ou ad hoc. Une autre idée à la base de l'invention est d'utiliser un canal de signalisation dédié, notamment à l'aide de systèmes radio à bas débit disponibles sur le marché, pour configurer ou reconfigurer à distance les noeuds du réseau, afin de faciliter le déploiement ou redéploiement du réseau. Une autre idée à la base de l'invention est de réaliser des procédures d'attachement radio automatisées entre les noeuds qui optimisent la connectivité globale du réseau et sa reconfigurabilité. Encore une autre idée à la base de l'invention est de favoriser l'établissement d'une liaison radio entre le noeud de communication et au moins un noeud de communication distant incluant au moins un élément choisi dans le groupe consistant en une station de base adjacente audit terminal radio local et un terminal radio adjacent à ladite station de base locale, afin de former un réseau fortement maillé.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une représentation schématique fonctionnelle d'un réseau radio flexible selon un premier mode de réalisation de l'invention,
La figure 2 est une représentation schématique fonctionnelle d'une station de base utilisable dans le réseau de la figure 1,
La figure 3 est une représentation schématique fonctionnelle d'un terminal radio utilisable dans le réseau de la figure 1,
La figure 4 est une représentation schématique fonctionnelle d'un noeud de télécommunication utilisable dans le réseau de la figure 1,
La figure 5 est un diagramme représentant une procédure d'attachement radio utilisable dans le réseau de la figure 1,
Les figures 6 et 7 sont des diagrammes représentant des procédés de gestion des liaisons radio utilisables dans le réseau de la figure 1,
La figure 8 est une représentation schématique fonctionnelle d'un noeud de télécommunication selon un autre mode de réalisation de l'invention,
La figure 9 est une représentation schématique fonctionnelle d'un réseau radio flexible comprenant un système de gestion,
La figure 10 est un diagramme représentant un partage du spectre utilisable dans le réseau de la figure 9,
La figure 11 est une représentation schématique fonctionnelle d'un réseau radio flexible selon un autre mode de réalisation de l'invention,
La figure 12 est un diagramme représentant une procédure de configuration IP utilisable dans le réseau de la figure 11.

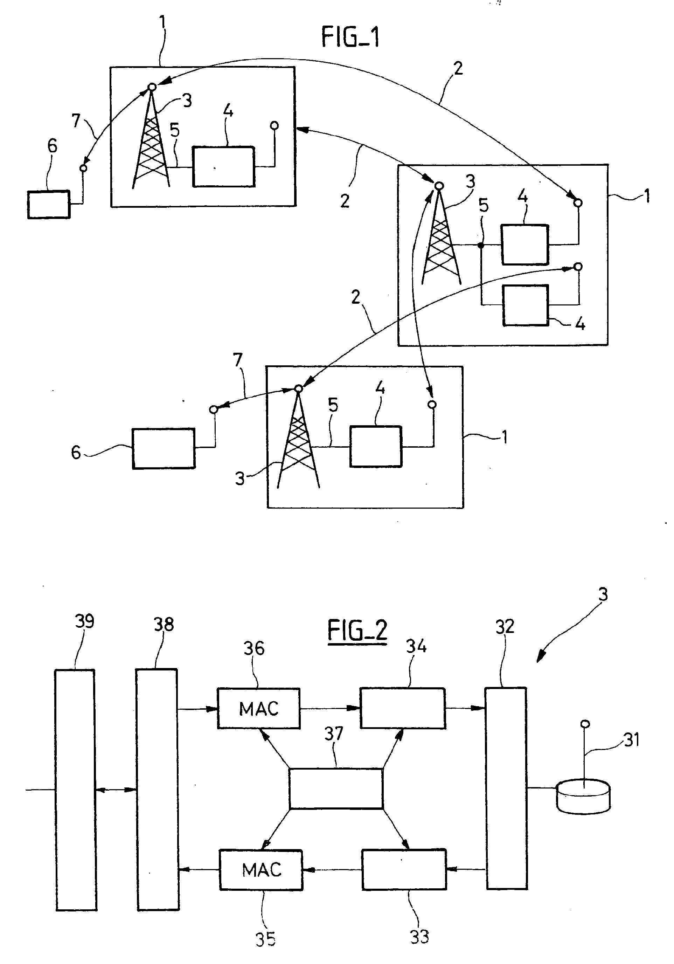

La figure 1 représente un réseau radio comprenant plusieurs noeuds 1 reliés entre eux par des liaisons radio bidirectionnelles 2 de type point à multipoint. Un noeud 1 comporte à chaque fois une ou plusieurs stations de base locales 3 et un ou plusieurs terminaux radio locaux 4, ainsi qu'un réseau local 5 reliant ces éléments entre eux pour permettre de transférer du trafic depuis une station de base locale 3 vers un terminal radio local 4 et réciproquement. Les liaisons radio 2 sont à chaque fois établies entre un terminal radio 4 d'un noeud 1 et une station de base 3 d'un autre noeud 1. Le réseau représenté comporte aussi des terminaux radio individuels 6 reliés au réseau par des liaisons radio bidirectionnelles 7 avec les stations de base 3 des noeuds 1. Le réseau permet ainsi d'établir des communications entre deux noeuds 1, entre un noeud 1 et un terminal radio individuel 6, et entre deux terminaux radio individuels 6 reliés à une même station de base 3 ou à des stations de base différentes.

Toute technologie radio point à multipoint peut être utilisée. Des caractéristiques à prendre en considération pour le choix d'une technologie radio point à multipoint sont notamment la portée des liaisons, l'existence ou non d'une procédure de transfert intercellulaire pour supporter la mobilité relative entre terminaux radio et stations de base, et l'existence ou non d'une procédure de réservation de ressources pour supporter la gestion de la qualité de service.

Une autre exigence devant être respectée est la réalisation d'une condition d'orthogonalité entre les équipements colocalisés au niveau d'un noeud. En particulier, les signaux émis par la ou les stations de base du noeud ne doivent pas gêner les communications du ou des terminaux radio du noeud avec les stations de base d'autres noeuds. Réciproquement, les communications montantes des terminaux radio du noeud ne doivent pas éblouir la ou les stations de base colocalisées. Pour cela, les technologies de type OFDM peuvent être préférées.

Selon un mode de réalisation préféré, les stations de base 3 et les terminaux radio 4 et 6 fonctionnent selon le standard IEEE 802.16e, qui offre à la fois une portée radio de type réseau métropolitain, des moyens de gestion de la qualité de service et des moyens de gestion du transfert intercellulaire. Entre une station de base 3 et les terminaux radio 4 et/ou 6 qui lui sont attachés, les liaisons montantes et descendantes sont duplexées dans le temps (méthode TDD). L'accès au support air est partagé entre ces terminaux radio par une méthode OFDMA, ce qui permet de gérer de manière fine et dynamique la bande passante allouée à chaque terminal.

Toute technique de commutation peut être utilisée dans les noeuds 1. De préférence, une pile protocolaire Ethernet/IP est employée, notamment avec le protocole IP mobile pour les terminaux radio.

Selon un mode de réalisation particulier représenté sur la figure 2, une station de base 3 compatible 802.16e comporte une ou plusieurs antennes 31, pouvant être sectorielle ou omnidirectionnelle ou autre, une unité frontale radio 32, un module de traitement en bande de base dans le sens montant 33 incluant un convertisseur analogique/numérique, un module de traitement en bande de base dans le sens descendant 34 incluant un convertisseur numérique/analogique, un module de contrôle d'accès au support (MAC) dans le sens montant 35, un module de contrôle d'accès au support (MAC) dans le sens descendant 36, un module de synchronisation 37, un module de traitement IP 38 pour le multiplexage/démultiplexage des paquets IP, et une interface Ethernet 39 pour la connexion au réseau local du noeud. Les modules de traitement en bande de base peuvent effectuer des tâches telles que codage/décodage, cryptage/décryptage, traitement des symboles OFDM, formation/analyse de faisceau, etc.

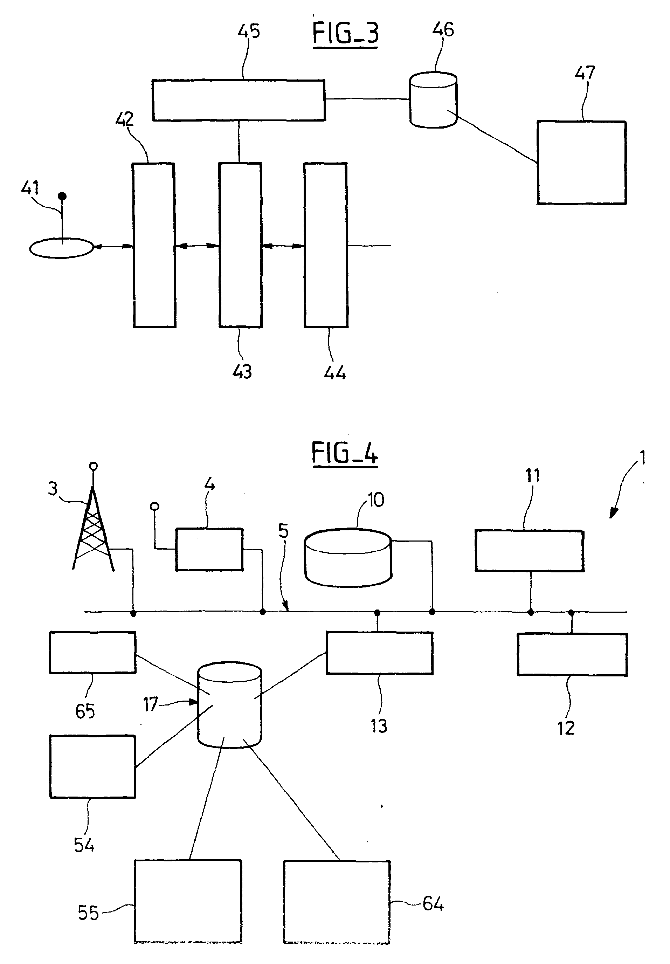

Selon un mode de réalisation particulier représenté sur la figure 3, un terminal radio 4 compatible 802.16e comporte une ou plusieurs antennes 41, pouvant être sectorielle ou omnidirectionnelle ou autre, une unité frontale radio 42, un module de traitement en bande de base 43, une interface IP 44 pour la connexion au réseau local du noeud, et une unité de commande 45 avec une mémoire 46 et/ou d'autres moyens de stockage. Selon une implantation particulière, un terminal radio 4 peut être réalisé à partir d'un micro-ordinateur muni d'une interface Ethernet et d'une interface WIMAX (PCI/PCMCIA). Selon une autre implantation particulière, un terminal radio 4 est essentiellement constitué d'un modem radio avec un microcontrôleur pour piloter la procédure d'attachement.

Selon un mode de réalisation particulier, un noeud comporte plusieurs terminaux radio, par exemple 5 ou plus. Dans ce cas, il est possible de réaliser certaines fonctions d'une manière intégrée pour plusieurs terminaux, par exemple avec une unité centrale de traitement du signal numérique partagée par tous les terminaux.

Selon un mode de réalisation particulier représenté sur la figure 4, un noeud 1 comporte, outre la ou les stations de base locales 3 et le ou les terminaux radio locaux 4, un commutateur/routeur 10, un serveur d'authentification/autorisation 11, un serveur d'adresse 12, par exemple du type DHCP ou autre, et une unité de commande de noeud 13 pour gérer la connectivité du noeud. La présente description est focalisée sur les interfaces point à multipoint des noeuds 1 et sur les liaisons supportées par ces interfaces. Toutefois, le noeud 1 peut comporter en outre d'autres interfaces (non représentées) reliées au réseau local 5, par exemple une interface radio vers un réseau satellite ou une passerelle vers un réseau extérieur filaire.

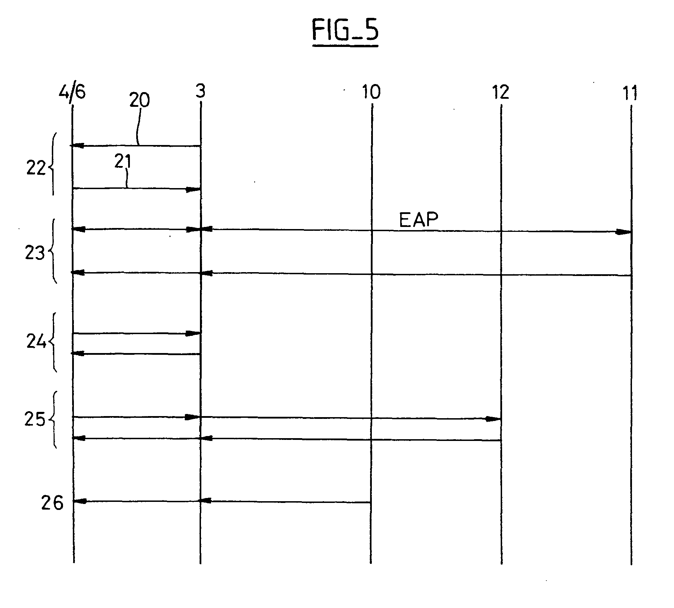

Selon un mode de réalisation préféré, une liaison radio 2 ou 7 entre une station de base 3 et un terminal radio 4 ou 6 est établie en mettant en oeuvre une procédure d'attachement radio schématisée sur la figure 5. Sur la figure 5, les chiffres de référence 3, 10, 11 et 12 désignent des éléments appartenant à un même noeud 1 et communiquant à travers le réseau local 5. Les communications entre la station de base 3 et le terminal radio 4 ou 6 passent sur l'interface air.

Périodiquement, la station de base 3 émet un signal de balise 20 sur un canal prédéterminé ou un ensemble prédéterminé de canaux, afin de pouvoir être détectée par les terminaux radio adjacents, du moins par les terminaux compatibles avec la technologie de couche physique employée.

De manière répétée ou continue, le terminal radio 4 ou 6 balaie une portion du spectre électromagnétique afin de détecter les signaux de balise des stations de base adjacentes. Par exemple, le terminal balaie un ensemble de fréquences autorisées défini par un bloc de données 47 qui est stocké dans la mémoire 46. Lorsqu'il détecte un signal de balise 20, le terminal radio 4 ou 6 répond par une requête d'attachement 21, envoyée par exemple sur la même fréquence que le signal de balise. Cette phase, appelée phase de synchronisation 22, sert à négocier des paramètres de couche 1 et 2 de la liaison à établir, par exemple les fréquences utilisées. En variante, plusieurs échanges, non représentés, peuvent avoir lieu au cours de cette phase.

La phase suivante est une phase d'authentification et d'autorisation 23 au cours de laquelle le terminal radio et le serveur d'authentification/autorisation 11 s'authentifient mutuellement, par exemple à l'aide d'un protocole EAP (Extensible Authentication Protocol) ou autre. Le serveur 11 vérifie, à l'aide d'un identifiant communiqué par le terminal radio, si celui-ci est autorisé à se connecter au noeud 1. Dans l'affirmative, le serveur 11 transmet au terminal radio un message d'autorisation et des clés de cryptage pour sécuriser la suite des échanges. Dans la négative, le serveur 11 transmet au terminal radio un message de refus d'authentification qui met fin à la procédure d'attachement.

La phase suivante est une phase d'entrée dans le réseau 24 au cours de laquelle la station de base 3 enregistre le terminal radio nouvellement connecté et crée un contexte pour gérer celui-ci.

La phase suivante est une phase de configuration IP 25, au cours de laquelle le terminal radio envoie une requête au serveur d'adresse 12 et reçoit en retour une adresse IP pour son interface radio.

La phase suivante est une phase de création de service, au cours de laquelle un module de signalisation du routeur 10 envoie des messages de signalisation pour réserver des ressources au niveau de la station de base 3 et du terminal radio pour certains flux, afin d'assurer des niveaux de qualité de service prédéfinis.

Selon un mode de réalisation particulier, un terminal radio 4 ou 6 établit une liaison radio avec une seule station de base à la fois. Après être entré dans le réseau, il continue à balayer le spectre électromagnétique pour détecter de manière actualisée les stations de base adjacentes. Les unités de commande 13 des noeuds 1 gèrent les procédures de transfert intercellulaire pour permettre la mobilité d'un terminal radio d'une cellule à une autre.

D'autres procédures d'attachement peuvent être mises en oeuvre entre les stations de bases et les terminaux radio, avec différents degrés de complexité. En particulier, une phase d'authentification avec un serveur d'authentification est un moyen facultatif de sécuriser l'accès au réseau. De plus, l'homme du métier connaît d'autres manières de sécuriser le réseau, si cela est nécessaire. De même, une phase de configuration d'adresses mettant en oeuvre un serveur d'adresse est un moyen facultatif d'allouer des adresses de manière dynamique. De plus, l'homme du métier connaît d'autres manières d'allouer des adresses. En conséquence, selon les modes de réalisation, le noeud de communication ne comporte pas nécessairement tous les éléments indiqués sur la figure 4, et il peut en outre comporter d'autres éléments, par exemple un agent domestique (home agent) pour mettre en oeuvre le protocole IP mobile.

L'utilisation d'une procédure automatisée fondée sur la détection des stations de base par les terminaux radio permet de faciliter le déploiement et le redéploiement d'un réseau radio comprenant une pluralité de noeuds 1. Toutefois, la possibilité pourrait exister qu'un terminal radio 4 s'attache une station de base 3 du même noeud 1, ce qui diminuerait la connectivité du noeud et créerait une connexion inutile, du fait de sa redondance avec le réseau local 5.

Selon un premier mode de réalisation préféré, pour éviter cette situation d'auto-attachement, les noeuds 1 mettent en oeuvre un procédé de gestion des liaisons radio dans lequel le terminal radio 4 ou à chaque terminal radio 4 d'un noeud 1 ne surveille pas la partie du spectre dans laquelle la ou chaque station de base du même noeud émet des signaux de balise. Pour cela, les données 47 dans la mémoire 46 sont configurées systématiquement de manière à exclure les fréquences allouées à la ou à chaque station de base locale 3 du noeud. Ainsi, l'attachement entre un terminal radio 4 et une station de base 3 du même noeud est rendu impossible. Dans un mode de réalisation qui sera détaillé plus bas, l'allocation des fréquences aux stations de base 3 est effectuée de manière dynamique à l'aide de messages de configuration transmis à distance. Dans ce cas, l'unité de commande 13 peut être chargée de mettre à jour les données 47 dans la mémoire 46 en fonction des messages de configuration reçus.

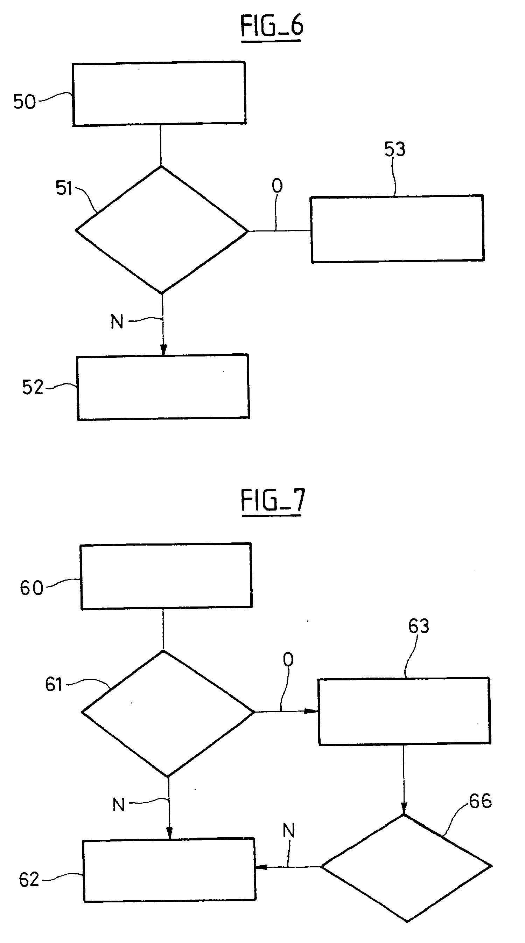

Selon un mode de réalisation alternatif, pour éviter une situation d'auto-attachement, les noeuds 1 mettent en oeuvre un procédé de gestion des liaisons radio représenté sur la figure 6. Les moyens logiques, matériels et/ou logiciels, pour exécuter ce procédé peuvent être disposés au niveau des unités de commande 13 ou des stations de base 3 ou des terminaux radio 4, ou encore être distribués entre plusieurs de ces éléments.

A l'étape 50, une situation d'adjacence entre un terminal radio 4 et une station de base 3 est détectée. A l'étape 51, une condition d'auto-attachement est testée. Cette condition est vraie si le terminal radio 4 et la station de base 3 appartiennent au même noeud 1, et fausse dans le cas contraire. Si la condition est fausse, la procédure d'attachement est poursuivie normalement à l'étape 52. Si la condition est vraie, la procédure d'attachement est interrompue à l'étape 53, de sorte que le terminal radio ne peut pas s'attacher à la station de base.

Ce procédé peut être implanté de nombreuses manières. Selon un premier exemple, l'étape 50 est effectuée par le terminal radio 4 recevant le signal de balise 20 de la station de base 3. Le signal de balise 20 contient un identifiant BSID de la station de base. Une table 54 des stations de base locales du noeud est préconfigurée dans une mémoire 17 de l'unité de commande 13 ou dans la mémoire 46 du terminal radio 4. L'étape 51 est effectuée par l'unité de commande 13 ou le terminal radio 4 en comparant l'identifiant BSID de la station de base détectée avec le contenu de la table 54. Si l'identifiant BSID est dans la table 54, l'étape 53 est effectuée par le terminal radio en omettant d'émettre la requête 21. Si l'identifiant BSID n'est pas dans la table 54, l'étape 52 est effectuée par le terminal radio en émettant la requête 21.

Selon un deuxième exemple, l'étape 50 est effectuée par la station de base 3 recevant la requête d'attachement 21 du terminal radio 4. La requête 21 contient un identifiant SSID du terminal radio 4. Une table des terminaux radio locaux 55 est préconfigurée dans une mémoire 17 de l'unité de commande 13 ou dans la station de base 3. L'étape 51 est effectuée par l'unité de commande 13 ou la station de base 3 en comparant l'identifiant SSID du terminal radio détecté avec le contenu de la table 55. Si l'identifiant SSID est dans la table 55, l'étape 53 est effectuée par la station de base en refusant les messages suivants du terminal radio ou en envoyant à celui-ci un message de rejet. Si l'identifiant SSID n'est pas dans la table 55, l'étape 52 est effectuée par la station de base en poursuivant la procédure d'attachement.

Les exemples ci-dessus placent l'étape 51 pendant la phase de synchronisation 22. En variante, l'étape 51 peut être effectuée par le serveur d'authentification/autorisation 11 pendant la phase 23, à partir de données d'autorisation préconfigurées dans le serveur 11 et remplissant la même fonction que les tables 54 et 55 précitées. Pour interrompre la procédure d'attachement, le serveur 11 émet un message de refus d'authentification. D'autres modes de réalisation peuvent se fonder sur d'autres données permettant d'identifier des teminaux radio et stations de base, par exemple sur des adresses IP.

Un noeud de télécommunication 1 comprend au minimum une station de base 3 et un terminal radio 4. Un noeud de plus grande connectivité peut être obtenu en prévoyant plusieurs terminaux radio locaux et/ou plusieurs stations de base locales. Toutefois, il peut arriver que ces terminaux radio et/ou stations de base génèrent des liaisons redondantes avec d'autres noeuds, ce qui peut accroître la capacité de transfert du noeud, mais non sa connectivité.

Selon des modes de réalisation préférés, pour éviter cette situation, les noeuds 1 mettent en oeuvre un procédé de gestion des liaisons radio représenté sur la figure 7. Les moyens logiques, matériels et/ou logiciels, pour exécuter ce procédé peuvent être disposés au niveau des unités de commande 13 ou des stations de base 3 ou des terminaux radio 4, ou encore être distribués entre plusieurs de ces éléments.

A l'étape 60, une situation d'adjacence entre un terminal radio local 4 d'un premier noeud et une station de base locale 3 d'un deuxième noeud est détectée. A l'étape 61, une condition de redondance est testée. Cette condition est vraie s'il existe déjà une liaison radio établie entre un terminal radio local du premier noeud et une station de base locale du deuxième noeud, et fausse dans le cas contraire. Si la condition est fausse, la procédure d'attachement est poursuivie normalement à l'étape 62. Si la condition est vraie, la procédure d'attachement est interrompue à l'étape 63, de sorte que le terminal radio 4 ne peut pas s'attacher à la station de base 3.

Ce procédé peut être implanté de nombreuses manières. Selon un premier exemple, dans le cas d'un noeud 1 comprenant plusieurs terminaux radio locaux, l'étape 60 est effectuée par un terminal radio 4 recevant le signal de balise 20 de la station de base 3. Le signal de balise 20 contient un identifiant BSID de la station de base. Une table 64 de la ou des stations de base auxquelles le ou les autres terminaux radio locaux du noeud sont attachés est tenue à jour dans la mémoire 17 de l'unité de commande 13. L'étape 61 est effectuée par l'unité de commande 13 en comparant l'identifiant BSID de la station de base détectée avec le contenu de la table 64. Si l'identifiant BSID est dans la table 64, l'étape 63 est effectuée par le terminal radio en omettant d'émettre la requête 21. Si l'identifiant BSID n'est pas dans la table 64, l'étape 62 est effectuée par le terminal radio en émettant la requête 21. Selon une variante, l'unité de commande 13 possède également une table de reconnaissance des noeuds, non représentée, permettant de reconnaître que plusieurs stations de base appartiennent à un même noeud et d'empêcher également que des liaisons redondantes soient établies à travers des stations de base différentes.

Selon un deuxième exemple, dans le cas d'un noeud 1 comprenant plusieurs stations de base locales, l'étape 60 est effectuée par une station de base locale 3 recevant la requête d'attachement 21 du terminal radio 4. La requête 21 contient un identifiant SSID du terminal radio 4. Une table 65 de la ou des terminaux radio qui sont attachés à la ou les autres stations de base du noeud est tenue à jour dans la mémoire 17 de l'unité de commande 13. L'étape 61 est effectuée par l'unité de commande 13 en comparant l'identifiant SSID du terminal radio détecté avec le contenu de la table 65. Si l'identifiant SSID est dans la table 65, l'étape 63 est effectuée par la station de base en refusant les messages suivants du terminal radio ou en envoyant à celui-ci un message de rejet. Si l'identifiant SSID n'est pas dans la table 65, l'étape 62 est effectuée par la station de base en poursuivant la procédure d'attachement. Selon une variante, l'unité de commande 13 possède également une table de reconnaissance des noeuds, non représentée, permettant de reconnaître que plusieurs terminaux radio appartiennent à un même noeud et d'empêcher ainsi que des liaisons redondantes soient établies à travers des terminaux radio différents.

Selon un mode de réalisation particulier du procédé de gestion, l'étape 63 se poursuit par une étape de détection 66 dans laquelle le terminal radio 4 recherche s'il existe une autre station de base adjacente à laquelle il puisse s'attacher. Si aucune autre station de base n'est détectée, la procédure d'attachement interrompue est reprise à l'étape 62.

Une phase indispensable du déploiement d'un réseau cellulaire est de décider et d'appliquer un partage du support air entre les différentes stations de base. Cette phase prend le nom de planification des fréquences dans le cas où ce partage repose sur des bandes de fréquences allouées aux stations de base. D'autres méthodes de partage existent.

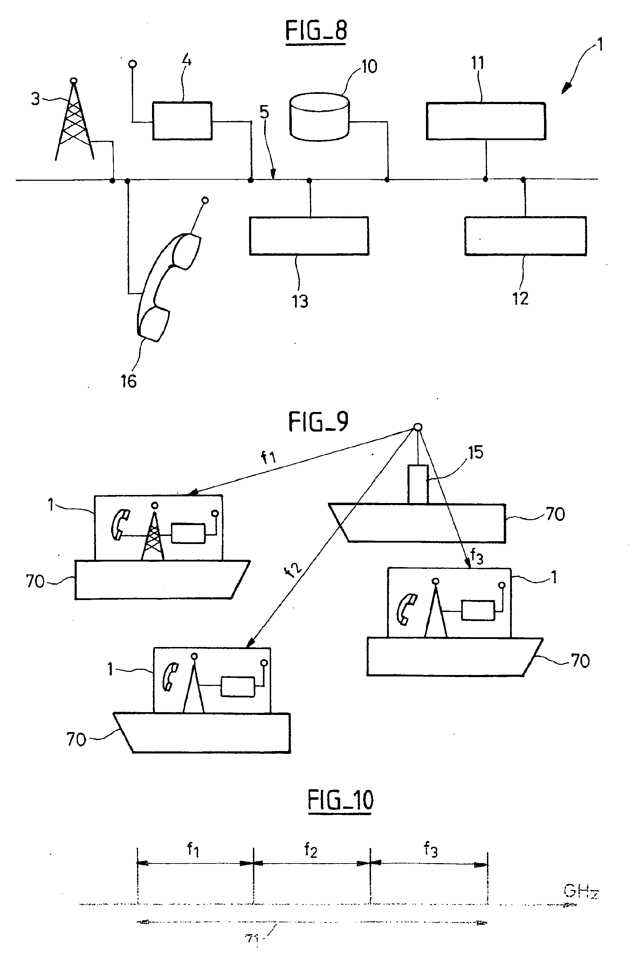

Pour réaliser un réseau rapidement reconfigurable et/ou avec des noeuds mobiles, il peut être souhaitable de gérer ce partage de manière dynamique. Pour cela, dans un mode de réalisation particulier représenté sur la figure 8, le noeud de télécommunication 1 comporte en outre un terminal radio à bas débit et longue portée 16 qui permet de recevoir des données de configuration depuis un système de gestion de réseau muni d'un émetteur approprié. Par longue portée, on désigne une portée au moins supérieure à la portée moyenne d'un lien point à multipoint entre un terminal radio 4 et une station de base 3 et, de préférence, une portée supérieure au diamètre du réseau radio formé par les noeuds 1, de manière que chaque noeud puisse être configuré depuis un même lieu. Par bas débit, on désigne une bande passante inférieure à la bande passante moyenne d'un lien point à multipoint entre un terminal radio 4 et une station de base 3. Dans certains modes de réalisation, le transfert de données de configuration entre un système de gestion de réseau et les noeuds 1 peut être facilement satisfait par des systèmes radio connus, par exemple des radios de type VHF utilisant des fréquences réservées, dont le débit est de l'ordre de 10 kb/s ou moins.

La figure 9 représente schématiquement un exemple d'utilisation du noeud 1 de la figure 8 pour constituer un réseau radio ad hoc. Dans cet exemple, les noeuds 1 sont installés sur des navires 70 et servent à constituer un réseau de communication couvrant toute une flottille. Le système de gestion de réseau 15 est représenté installé sur un navire 70. Il pourrait également être colocalisé avec un ou plusieurs noeuds 1. Après qu'un ensemble de noeuds 1 a été rassemblé dans une zone géographique, le système de gestion de réseau 15 transmet à chaque noeud 1, sur un canal prédéfini, la ou les ressources du support air qui sont allouées à sa ou ses stations de base locales 3. L'unité de commande 13 reçoit ces données par le terminal radio 16 et configure la station de base 3 en fonction de ces données, de manière à respecter les ressources allouées. Dans l'exemple représenté sur les figures 9 et 10, le partage du support air entre les stations de base est un partage fréquentiel. Le système de gestion 15 partage un spectre autorisé 71 en plusieurs bandes de fréquences, ici f1, f2 et f3, alloue une bande de fréquence à chaque station de base et transmet des données de configuration correspondantes aux noeuds 1. Si le nombre des bandes de fréquences disponibles est inférieur au nombre des stations de base, des techniques de réutilisation de fréquence peuvent être employées en tenant compte de la position géographique des stations de base. Il peut aussi être décidé de n'activer qu'une partie des stations de base. Pour cela, le système de gestion 15 est de préférence capable de commander à distance l'activation/désactivation des stations de base par la transmission de données de configuration correspondantes sur un canal de gestion prédéfini.

Une fois que les stations de base ont reçu leurs bandes de fréquences respectives et ont été activées, les procédures d'attachement avec les terminaux radio peuvent s'exécuter. Ainsi, il peut être rapidement obtenu un réseau radio couvrant toute une flottille de navires ou autres véhicules. Selon la disposition des noeuds et le nombre de terminaux radio prévus, une topologie maillée ou partiellement maillée ou autre peut être obtenue. Globalement, un degré de connectivité élevé des noeuds 1 favorise la résilience du réseau confronté à des événements tels que la disparition d'une liaison 2 ou d'un noeud 1. La mobilité des noeuds entre eux peut être gérée par les unités de commande 13 des noeuds selon des procédures de transfert intercellulaire connues.

Comme indiqué plus haut, dans certains modes de réalisation, les noeuds de communication 1 sont capables d'exécuter des procédures de gestion des liaisons radio évitant l'établissement de liaisons redondantes. De telles capacités présentent une utilité dans de nombreuses situations, mais ne sont pas indispensables dans tous les cas ou dans tous les noeuds. Selon un mode de réalisation préféré, un noeud de communication 1 muni de telles capacités de gestion des liaisons radio est contrôlable depuis le système de gestion 15 pour sélectivement activer ou désactiver ces procédures selon qu'il est souhaité ou non que ce noeud établisse des liaisons redondantes avec un noeud adjacent. Il peut être souhaité de permettre ou de forcer l'établissement de plusieurs liaisons radio parallèles entre deux noeuds pour accroître le débit de données.

A titre d'exemple illustratif, dans un réseau de type 802.16e, les bandes ou canaux utilisés par les stations de base ont une largeur de 1,75 à 20MHz. Une station de base disposant d'une bande de 3.5 MHz peut offrir jusqu'à environ 25 Mb/s selon les conditions de propagation du milieu et l'éloignement des terminaux radio. En conditions d'utilisation courante, l'éloignement maximum est d'environ 15 à 40 km selon les systèmes d'antennes utilisés. A titre d'exemple illustratif, un spectre réglementaire autorisé couvrant 20 MHz peut être partagé en 6 bandes de 3,5MHz.

Un réseau tel que représenté sur la figure 9 peut comporter un ou plusieurs systèmes de gestion. Un système de gestion peut aussi remplir d'autres fonctions que la configuration des stations de base. Selon un mode de réalisation particulier, le système de gestion 15 sert à imposer ou à contraindre la sélection d'une station de base 3 par un terminal radio 4 du réseau. Pour cela, le système de gestion 15 transmet sur un canal de gestion prédéfini des données de configuration destinées à configurer un terminal radio d'un noeud 1, afin d'obliger le terminal à s'attacher à une station de base déterminée, lorsque l'adjacence radio existe, ou bien afin d'imposer des règles de sélection utilisables par le terminal radio lorsqu'il doit choisir entre plusieurs stations de bases adajcentes. Par exemple, une manière dont le système de gestion 15 peut désigner les stations de base concernées est de communiquer au terminal radio les fréquences que ces stations de base utilisent pour émettre des signaux de balise. Ainsi, des données de configuration reçues par le noeud 1 servent à modifier l'ensemble des fréquences autorisées défini par le bloc de données 47, ou à définir des fréquences interdites, ou à créer un ordre hiérarchique de préférence entre différentes fréquences. Une telle fonction de configuration des terminaux radio peut par exemple servir à forcer l'établissement d'une liaison radio directe entre deux noeuds déterminés.

Pour réaliser l'attribution dynamique des fréquences aux stations de base, d'autres méthodes peuvent aussi être employées, notamment les techniques automatiques connues sous le nom de Dynamic Frequency Selection (DFS).

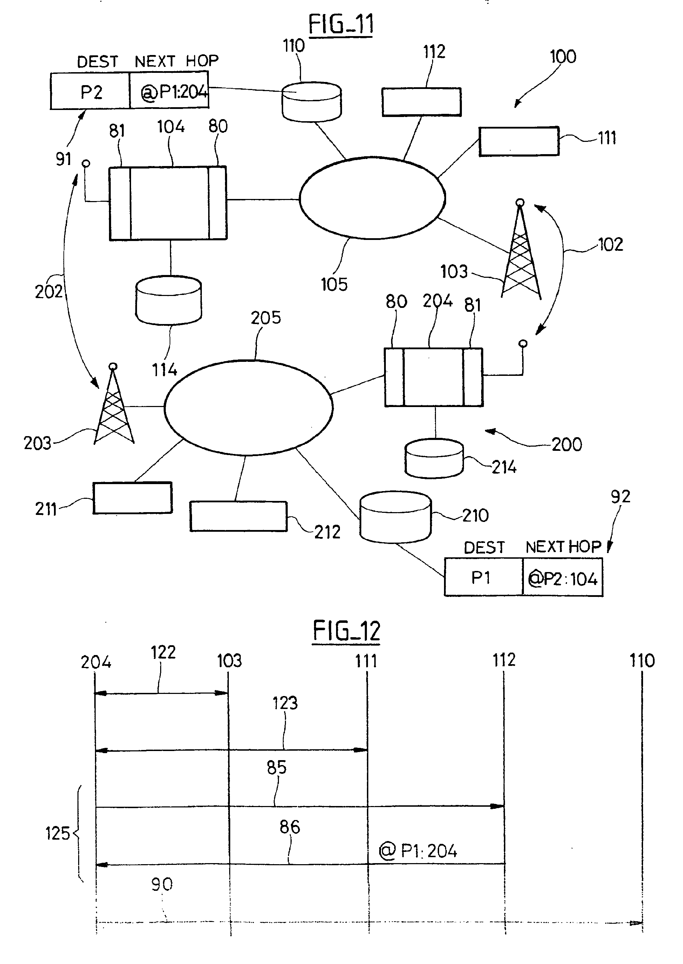

Comme indiqué, le réseau radio de la figure 1 ou 9 peut être réalisé avec différents protocoles de communication. En référence aux figures 11 et 12, on décrit maintenant un procédé de configuration IP utilisable dans un réseau radio selon l'invention. Sur la figure 11, des éléments identiques ou similaires à ceux de la figure 4 sont désignés par les mêmes chiffres de référence augmentés de 100 et 200. La figure 11 montre deux noeuds de télécommunication 100 et 200 reliés par des liaisons radio 102 et 202. En outre, les terminaux radio 104 et 204 comportent ici un routeur respectif 114 et 214.

Selon ce mode de réalisation, un lot d'adresses IP est alloué à chaque noeud. Par exemple, un préfixe P1 est alloué au noeud 100, sur la base duquel sont formées une adresse IP pour la station de base 103 et une adresse IP pour l'interface 80 du (ou de chaque) terminal radio 104 reliée au réseau local 105. Les adresses restantes peuvent être allouées à des terminaux radio distants lorsqu'il s'attachent à la station de base 103, comme il va être expliqué plus bas. Par exemple, le terminal radio 204 reçoit une adresse IP pour son interface radio 81 depuis la station de base 103 comme montré sur la figure 12. Ainsi, le noeud 100 fait partie d'un premier espace d'adressage de préfixe P1. Similairement, le noeud 200 fait partie d'un deuxième espace d'adressage de préfixe P2.

Sur la figure 12, des étapes identiques ou similaires à celles de la figure 5 sont désignées par les mêmes chiffres de référence augmentés de 100. A l'étape 125, après la réussite d'une phase de synchronisation 122 et d'une phase d'authentification/autorisation 123, le terminal radio 204 envoie une requête d'adresse 85 à destination du serveur d'adresse 112, par exemple une requête DHCP à destination d'un serveur DHCP. En réponse, le serveur 112 choisit une adresse IP parmi le lot alloué au noeud 100 et l'envoie au terminal radio 204. Par exemple, l'adresse est formée sur la base du préfixe P1 et sera notée « @P1:204 ». Similairement au terminal 104, le terminal radio 204 possède une adresse IP choisie parmi le lot alloué au noeud 200, à savoir avec le préfixe P2, pour désigner son interface 80 reliée au réseau local 205.

Par la suite, ayant reçu une adresse IP pour l'interface radio 81 du terminal radio 204, le routeur 214 distribue l'adresse du réseau auquel la station de base 103 le connecte. Pour cela, tout protocole de routage IGP peut être employé, par exemple RIP, OSPF, IS-IS, etc. Avantageusement, un protocole de routage pour réseau ad hoc est employé, par exemple le protocole OLSR, pour faciliter la reconfiguration du réseau et la convergence des tables de routage lors d'événements tels que l'ajout ou le retrait d'un noeud. Une fois l'état stationnaire atteint, les routeurs 114 et 214 des terminaux radio et les routeurs 110 et 210 ont des tables de routage complètes.

Le procédé décrit ci-dessus permet d'automatiser la configuration IP du réseau et peut être utilisé dans d'autres topologies que celle représenté sur la figure 11.

Selon un mode de réalisation préféré, la table de routage 91 du routeur 110 est configurée pour atteindre le réseau du noeud 200 via la station de base 103. Pour cela, le routeur 214 du terminal 204 annonce au réseau 105 une route à destination du réseau de préfixe P2 passant par son interface radio 81. Ainsi, la table de routage 91 enregistre cette route comme indiqué sur la figure 11. Réciproquement, la table de routage 92 du routeur 210 peut être configurée pour atteindre le réseau du noeud 100 via la station de base 203. Ce mode de réalisation permet de privilégier l'utilisation des liaisons descendantes depuis une station de base vers un terminal radio, plutôt que les liaisons montantes depuis un terminal radio vers une station de base, afin de bénéficier du meilleur débit. Ce mode de réalisation est utilisable dans toute topologie où il existe au moins deux routes possibles pour aller d'un premier noeud à un deuxième noeud, l'une passant par une liaison montante et l'autre par une liaison descendante.

Certains des éléments représentés, notamment les unités de commande, serveurs et autres modules, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Un système de gestion de réseau peut être un équipement matériel, par exemple un micro-ordinateur, une station de travail, un appareil connecté à l'Internet ou tout autre dispositif de communication dédié ou à usage général. Des programmes logiciels exécutés par ce système remplissent des fonctions de gestion du réseau pour contrôler des éléments de réseau.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Noeud de télécommunication (1), **caractérisé par le fait qu'**il comporte:
nu moins une station de base locale (3) apte à mettre en oeuvre une méthode de multiplexage pour établir des liaisons radio point à multipoint avec des terminaux radio,
au moins un terminal radio local (4) apte à mettre on oeuvre ladite méthode de multiplexage pour établir une liaison radio avec une station de base,
et un commutateur (10) pour transférer des données entre ledit terminal radio local et ladite station de base locale,
la station de base locale étant apte à émettre des signaux de balise (20) pour être détectée par des terminaux radio adjacents,
le terminal radio local comportant des moyens de détection de signaux de balise pour détecter une station de base adjacente audit terminal radio local, et
ledit noeud de communication comportant des moyens de gestion des liaisons radio (13, 45) pour inhiber l'établissement d'une liaison radio impliquant ledit au moins un terminal radio local et/ou ladite au moins une station de base locale et qui serait redondante par rapport audit commutateur du noeud ou par rapport à une liaison radio déjà établie impliquant ledit au moins un terminal radio local et/ou ladite au moins une station de base locale.

2. Noeud de télécommunication selon la revendication 1, **caractérisé par le fait que** les moyens de gestion des liaisons radio (47, 54, 55) sont aptes à inhiber l'établissement d'une liaison radio entre ledit ou chaque terminal radio local et ladite ou chaque station de base locale.

3. Noeud de télécommunication selon la revendication 1, **caractérisé par le fait qu'**il comporte une pluralité de terminaux radio locaux, lesdits moyens de gestion des liaisons radio (64) étant aptes à détecter qu'une liaison radio est établie entre un premier desdits terminaux radio locaux et une station de base et à inhiber l'établissement d'une liaison radio entre un second desdits terminaux radio locaux et ladile station de base en réponse à ladite détection.

4. Noeud de télécommunication selon la revendication 1, **caractérisé par le fait que** lesdits moyens de gestion des liaisons radio (65) sont aptes à détecter qu'une liaison radio est établie entre ladite station de base locale et un premier terminal radio d'un noeud distant et à inhiber l'établissement d'une liaison radio entre ladite station de base locale et un second terminal radio dudit noeud distant en réponse à ladite détection.

5. Noeud de télécommunication selon l'une des revendications 1 à 4, **caractérisé par le fait que** lesdits moyens de gestion des liaisons radio comportent une mémoire (17) stockant des identifiants logiques de stations de base distantes (64) avec lesquels un dit terminal radio local n'est pas autorisé à établir une liaison radio et/ou des identifiants logiques de terminaux radios distants (65) avec lesquels une dite station de base locale n'est pas autorisée à établir une liaison radio.

6. Noeud de télécommunication selon la revendication 1, **caractérisé par le fait que** ladite ou chaque station de base locale est apte à réserver et allouer des ressources du support air à des communications déterminées.

7. Noeud de télécommunication selon la revendication 1, **caractérisé par le fait que** la méthode de multiplexage est du type OFDMA.

8. Noeud de télécommunication selon la revendication 1, **caractérisé par le fait qu'**il est installé sur un véhicule (70).

9. Noeud de télécommunication selon la revendication 2, **caractérisé par le fait que** les moyens de gestion des liaisons radio (47) sont aptes à configurer les moyens de détection (42) d'un terminal radio local (4) de manière que lesdits moyens de détection surveillent une partie du spectre excluant une ou chaque fréquence sur laquelle une station de base locale (3) émet des signaux de balise (20).

10. Noeud de télécommunication selon l'une des revendications 1 à 9, **caractérisé par le fait que** ledit ou chaque terminal radio local comporte une unité de commande (45) pour piloter une procédure d'attachement radio automatisée avec ladite station de base adjacente détectée.

11. Noeud de télécommunication selon l'une des revendications 1 à 10, **caractérisé par le fait que** lesdits moyens de gestion des liaisons radio sélectionnent des fréquences radio utilisables par les moyens de détection de signaux de balise dudit ou de chaque terminal radio local pour détecter des signaux de balise d'une station de base adjacente, de manière à éviter de générer des liaisons redondantes.

12. Noeud de télécommunication selon la revendication 11, **caractérisé par le fait que** lesdits moyens de détection de signaux de balise dudit ou de chaque terminal radio local balayent de manière répétée ou continue lesdites fréquences radio utilisables.

13. Noeud de télécommunication selon la revendication 11 ou 12, **caractérisé par le fait qu'**il comporte une mémoire (46) stockant des données (47) définissant lesdites fréquences radio utilisables par les moyens de détection de signaux de balise dudit ou de chaque terminal radio local.

14. Noeud de télécommunication selon la revendication 13, **caractérisé par le fait qu'**il comporte une unité de commande apte à mettre à jour lesdites données (47) en fonction de messages de configuration reçus.

15. Réseau radio comprenant au moins un noeud de télécommunication selon la revendication 13 ou 14 et un système de gestion de réseau (15) apte à transmettre des messages de configuration sur un canal de gestion prédéfini pour configurer lesdites fréquences radio utilisables par les moyens de détection de signaux de balise dudit ou de chaque terminal radio local.

## Claims

1. A telecommunication node (1), comprising:
at least one local base station (3) capable of implementing a multiplexing method for establishing peer-to-multipeer radio links with radio terminals,
at least one local radio terminal (4) capable of implementing said multiplexing method for establishing a radio link with a base station,
and a switch (10) for transferring data between said local radio terminal and said local base station,
the base station being capable of emitting beacon signals (20) in order to be detected by adjacent radio terminals,
the local radio terminal comprising means of detecting beacon signals in order to detect a base station adjacent to said local radio terminal, and **characterized in that** said at least one base station, said at least one local radio terminal, and said switch communicate over a local area network, said telecommunication node comprising means for managing radio links (13, 45) in order to inhibit the establishment of a radio link involving said at least one local radio terminal and/or said at least one local base station, which would be redundant with respect to said switch of the node or with respect to an already-established radio link involving said at least one local radio terminal and/or said at least one local base station.

2. A telecommunication node according to claim 1, **characterized by** the fact that the means for managing the radio links (47, 54, 55) are capable of inhibiting the establishment of a radio link between said or each local radio terminal and said or each local base station.

3. A telecommunication node according to claim 1, **characterized by** the fact that it comprises a plurality of local radio terminals, said means for managing the radio links (64) being capable of detecting that a radio link has been established between a first one of said local radio terminals and a base station, and of inhibiting the establishment of a radio link between a second one of said local radio terminals and said base station in response to the detection.

4. A telecommunication node according to claim 1, **characterized by** the fact that said means for managing the radio links (65) are capable of detecting that a radio link has been established between said local base station and a first radio terminal of a remote node, and of inhibiting the establishment of a radio link between said local base station and a second radio terminal of said remote node in response to said detection.

5. A telecommunication node according to one of the claims 1 to 4, **characterized by** the fact that said means for managing the radio links comprise a memory (17) storing logical identifiers of remote base stations (64) with which a said local radio terminal is not authorized to establish a radio link, and/or logical identifiers of remote radio terminals (65) with which a said local base station is not authorized to establish a radio link.

6. A telecommunication node according to claim 1, **characterized by** the fact that said or each local base station is capable of reserving and allocating resources of the air medium to determined communications.

7. A telecommunication node according to claim 1, **characterized by** the fact that the multiplexing method is OFDMA.

8. A telecommunication node according to claim 1, **characterized by** the fact that it is installed on a vehicle (70).

9. A telecommunication node according to claim 2, **characterized by** the fact that the means for managing the radio links (47) are capable of configuring the means for detecting (42) a local radio terminal (4) such that said means for detecting monitor a part of the spectrum excluding one or each frequency on which a local base station (3) emits beacon signals (20).

10. A telecommunication node according to one of the claims 1 to 9, **characterized by** the fact that said or each local radio terminal comprises a command unit (45) to control an automated radio assignment procedure with said detected adjacent base station.

11. A telecommunication node according to one of the claims 1 to 10, **characterized by** the fact that said means of managing the radio links select frequencies usable by said or each local radio terminal's means for detecting beacon signals in order to detect beacon signals from an adjacent base station, in such a way as to avoid generating redundant links.

12. A telecommunication node according to claim 11, **characterized by** the fact that said or each local radio terminal's said means for detecting beacon signals repeatedly or continuously scan said usable radio frequencies.

13. A telecommunication node according to claim 11 or 12, **characterized by** the fact that it comprises a memory (46) storing data (47) defining said radio frequencies usable by said or each local radio terminal's means for detecting beacon signals.

14. A telecommunication node according to claim 13, **characterized by** the fact that it comprises a control unit capable of updating said data (47) as a function of received configuration messages.

15. A radio network comprising at least one telecommunication node according to claim 13 or 14 and a network management system (15) capable of transmitting configuration messages on a predefined management channel in order to configure said radio frequencies usable by said or each local radio terminal's means for detecting beacon signals.

## Patentansprüche

1. Telekommunikationsknoten (1), umfassend:
mindestens eine lokale Basisstation (3), welche dazu geeignet ist, ein Multiplexverfahren für den Aufbau von Punkt-zu-Mehrpunkt-Funkverbindungen mit Funkendgeräten zu implementieren,
mindestens ein lokales Funkendgerät (4), welches dazu geeignet ist, das besagte Multiplexverfahren zu implementieren, um eine Funkverbindung mit einer Basisstation aufzubauen,
und einen Schalter (10) zum Übertragen der Daten zwischen dem besagten lokalen Funkendgerät und der besagten lokalen Basisstation,
wobei die lokale Basisstation dazu geeignet ist, Bakensignale (20) auszusenden, um von den benachbarten Funkendgeräten erkannt zu werden,
wobei das lokale Funkendgerät Mittel zur Detektion von Bakensignalen umfasst, um eine mit dem lokalen Funkendgerät benachbarte Basisstation zu erkennen, und
**dadurch gekennzeichnet, dass** die besagte mindestens eine Basisstation, der besagte mindestens eine Funkendgerät und der besagte Schalter über ein lokales Netzwerk miteinander kommunizieren, wobei der besagte Telekommunikationsknoten Mittel zur Verwaltung der Funkverbindungen (13, 45) umfasst, um den Aufbau einer Funkverbindung, welche das besagte mindestens eine lokale Funkendgerät und/oder die besagte mindestens eine lokale Basisstation involviert und in Bezug auf den besagten Schalter des Knotens oder in Bezug auf eine schon bestehende Funkverbindung, welche das besagte mindestens eine lokale Funkendgerät und/oder die besagte mindestens eines lokale Basisstation involviert, redundant wäre, zu unterdrücken.

2. Telekommunikationsknoten nach Anspruch 1, **dadurch gekennzeichnet, dass** die Mittel zur Verwaltung der Funkverbindungen (47, 54, 55) dazu geeignet sind, den Aufbau einer Funkverbindung zwischen dem besagten oder jedem lokalen Funkendgerät und der besagten oder jeder lokalen Basisstation zu unterdrücken.

3. Telekommunikationsknoten nach Anspruch 1, **dadurch gekennzeichnet, dass** er eine Mehrzahl von lokalen Funkendgeräten umfasst, wobei die besagten Mittel zur Verwaltung der Funkverbindungen (64) dazu geeignet sind, zu erkennen, dass zwischen einem ersten der besagten lokalen Funkendgeräte und einer Basisstation eine Funkverbindung besteht, und den Aufbau einer Funkverbindung zwischen einem zweiten der besagten lokalen Funkendgeräte und der besagten Basisstation in Reaktion auf das besagte Erkennen zu unterdrücken.

4. Telekommunikationsknoten nach Anspruch 1, **dadurch gekennzeichnet, dass** die besagten Mittel zur Verwaltung der Funkverbindungen (65) dazu geeignet sind, zu erkennen, dass zwischen der besagten lokalen Basisstation und einem ersten Funkendgerät eines entfernten Knotens besteht, und den Aufbau einer Funkverbindung zwischen der besagten lokalen Basisstation und einem zweiten Funkendgerät des besagten entfernten Knotens in Reaktion auf das besagte Erkennen zu unterdrücken.

5. Telekommunikationsknoten nach einem der Ansprüche 1 bis 4, **dadurch gekennzeichnet, dass** die besagten Mittel zur Verwaltung der Funkverbindungen einen Speicher (17) umfassen, in welchem die logischen Kennungen von entfernten Basisstationen (64), mit welchen ein besagtes lokales Funkendgerät keine Funkverbindung aufbauen darf, und/oder die logischen Kennungen von entfernten Funkendgeräten (65), mit welchen eine besagte lokale Basisstation keine Funkverbindung aufbauen darf, gespeichert sind.

6. Telekommunikationsknoten nach Anspruch 1, **dadurch gekennzeichnet, dass** die besagte oder jede lokale Basisstation dazu geeignet ist, Ressourcen des Luftmediums zu reservieren und bestimmten Kommunikationen zuzuweisen.

7. Telekommunikationsknoten nach Anspruch 1, **dadurch gekennzeichnet, dass** das Multiplexverfahren vom Typ OFDMA ist.

8. Telekommunikationsknoten nach Anspruch 1, **dadurch gekennzeichnet, dass** er in einem Fahrzeug (70) installiert ist.

9. Telekommunikationsknoten nach Anspruch 2, **dadurch gekennzeichnet, dass** die Mittel zur Verwaltung der Funkverbindungen (47) dazu geeignet sind, die besagten Detektionsmittel (42) eines lokalen Funkendgeräts (4) derart zu konfigurieren, dass die besagten Detektionsmittel einen Teil des Spektrums überwachen, welcher eine oder jede Frequenz, auf welcher eine lokale Basisstation (3) Bakensignale (20) aussendet, ausschließt.

10. Telekommunikationsknoten nach einem der Ansprüche 1 bis 9, **dadurch gekennzeichnet, dass** das besagte oder jedes lokale Funkendgerät eine Steuereinheit (45) umfasst, um eine automatisierte Funkanschlussprozedur mit der besagten erkannten benachbarten Basisstation zu steuern.

11. Telekommunikationsknoten nach einem der Ansprüche 1 bis 10, **dadurch gekennzeichnet, dass** die besagten Mittel zur Verwaltung der Funkverbindungen Funkfrequenzen auswählen, welche von den Mittel zur Detektion von Bakensignalen des besagten oder eines jeden lokalen Funkendgeräts verwendet werden können, um Bakensignale einer benachbarten Basisstation zu erkennen, um das Erzeugen von redundanten Verbindungen zu vermeiden.

12. Telekommunikationsknoten nach Anspruch 11, **dadurch gekennzeichnet, dass** die besagten Mittel zur Detektion von Bakensignalen des besagten oder eines jeden lokalen Funkendgeräts die besagten verwendbaren Funkfrequenzen wiederholt oder kontinuierlich abtasten.

13. Telekommunikationsknoten nach Anspruch 11 oder 12, **dadurch gekennzeichnet, dass** er einen Speicher (46) umfasst, in dem die Daten (47), welche die besagten von den Mitteln zur Detektion von Bakensignalen des besagten oder eines jeden lokalen Funkendgeräts verwendbaren Funkfrequenzen definieren, gespeichert werden.

14. Telekommunikationsknoten nach Anspruch 13, **dadurch gekennzeichnet, dass** er eine Steuereinheit umfasst, welche dazu geeignet ist, die besagten Daten (47) gemäß den empfangenen Konfigurationsnachrichten zu aktualisieren.

15. Funknetzwerk mit mindestens einem Telekommunikationsknoten nach Anspruch 13 oder 14 und einem Netzwerkverwaltungssystem (15), welches dazu geeignet ist, Konfigurationsnachrichten auf einem vorbestimmten Verwaltungskanal zu übertragen, um die besagten von den Mitteln zur Detektion von Bakensignalen des besagten oder eines jeden lokalen Funkendgeräts verwendbaren Funkfrequenzen zu konfigurieren.
